**Europäisches Patentamt**

**European Patent Office**

**Office européen des brevets**

(19)

(11) Veröffentlichungsnummer: **0 310 953**

**A1**

(12)

# EUROPÄISCHE PATENTANMELDUNG

(21) Anmeldenummer: **88116160.8**

(22) Anmeldetag: **30.09.88**

(51) Int. Cl.⁴: **B23Q 3/155**

(30) Priorität: **08.10.87 CH 3941/87**

(43) Veröffentlichungstag der Anmeldung:
**12.04.89 Patentblatt 89/15**

(84) Benannte Vertragsstaaten:
**AT BE DE ES FR GB IT NL SE**

(71) Anmelder: **Starrfräsmaschinen AG**
**Seebleichestrasse 61**
**CH-9400 Rorschacherberg(CH)**

(72) Erfinder: **Novak, Peter**
**Oberstrasse 16**
**CH-8274 Tägerwilen(CH)**

(74) Vertreter: **EGLI-EUROPEAN PATENT**
**ATTORNEYS**
**Horneggstrasse 4**
**CH-8008 Zürich(CH)**

(54) **Werkzeugspeicher für Werkzeugmaschinen.**

(57) Der Werkzeugspeicher ist ein an einer Säule (1) gelagerter, drehbarer Rotor (11), an dessen Umfang Werkzeugmagazine (2) in dichter, lückenloser Anordnung am gesamten Umfang abgestützt sind, so dass keine Zugriffsmöglichkeit für einen Werkzeugwechsler besteht. Zum Zugriff zu einem Werkzeug (5) wird eine Vorschubeinheit (23) mit einem oberhalb und unterhalb des Rotors (11) angeordneten Verschiebearm (24, 25) eingesetzt. Die Verschiebearme (24, 25) greifen mit Magazingreifern (8) das gewünschte, vorgelegte Magazin (2) und schieben es über die Länge der Werkzeuge der benachbarten Kassetten vor. Mit einem Werkzeugwechsler (30) kann nun das gewünschte Werkzeug ergriffen und an die Einsatzstelle gebracht werden. Der Rotor (11) kann in dieser Anordnung mit der grösstmöglichen Zahl von Werkzeugen gespeichert werden, und trotzdem kann dadurch ein sehr schneller Werkzeugwechsel erreicht werden, was vor allem bei Einspindel-Bearbeitungsmaschinen von Vorteil ist.

Fig. 3

Fig. 4

## Werkzeugspeicher für Werkzeugmaschinen

Die Erfindung betrifft einen Werkseugspeicher für Werkzeugmaschinen mit numerischer Steuerung zur spanenden Bearbeitung von Werkstücken, insbesondere für Einspindel-Werkzeugmaschinen, Zum Speichern von Werkzeugen und zur Entnahme und Rückgabe der Werkzeuge mittels einer Wechselvorrichtung, welcher Speicher eine ortsfeste, bodenseitig befestigte, senkrechte Säule aufweist, die einen walzenförmigen, drehbar gelagerten Rotor trägt, welcher mit einer zur Aufnahme der Werkzeuge dienenden Lagervorrichtung zur formschlüssigen Lagerung der Werkzeuge ausgerüstet ist.

Werkzeugspeicher werden bei vielen Werkzeugmaschinen, insbesondere für die numerisch gesteuerte Bearbeitung von Werkstücken, insbesondere in Bearbeitungszentren, verwendet und sind in verschiedenen Ausführungen bekannt. Eine bekannte Grundform des Werkzeugspeichers ist das scheibenförmige Tellermagazin, an dessen Umfang die Werkzeuge, meistens zusammen mit einem Werkzeughalter, trommel- oder sternförmig angeordnet sind. Bei dieser Sternförmigen Anordnung der Werkzeuge kann eine Erhöhung der Zahl der Speicherplätze dadurch erreicht werden, dass mehrere solcher Tellermagazine lagenweise aufeiander geschichtet werden, siehe beispielsweise die DE-Patentschrift 1 912 369. Bei diesem Speicher sind die Werkzeuge in axial verschiebbaren Blökken gelagert, mit Hilfe welcher die Werkzeuge in eine Werkzeugübergabestellung verfahrbar sind, an welcher sie vom Werkzeugwechsler aus dem Magazin entnommen oder in dasselbe zurückgelegt werden. Nachteilig ist jedoch der verhältnismässig grosse Aufwand für die verschiebbare Lagerung der Blöcke und des Verschiebemechanismus.

Zwar kann dieser Aufwand dadurch verringert werden, dass die Werkzeuge in mehreren Etagen axial auf einer rotierenden Trommel angordnet sind und mit ihrer Längsachse tangential zu einer zum Zylinder konzentrischen Kreisbahn liegen, so dass sie durch eine Greifervorrichtung entnommen und eingelegt werden können. Nachteilig ist jedoch, dass bei dieser Anordnung die Zahl der am Umfang der Trommel anzuordnenden Werkzeuge verhältnismässig gering ist, siehe die CH-Patentschrift 556 712.

Eine weitere Grundform eines Werkzeugspeichers ist das Kettenmagazin, bei welchem die Werkzeuge parallel oder senkrecht zu den Drehachsen eines umlaufenden Kettentriebes gelagert sind. Reicht jedoch die Zahl der Werkzeugplätze eines solchen Magazins nicht aus, muss ein weiteres Magazin oder müssen weitere Magazine an der Werkzeugmaschine aufgestellt werden. Nachteilig ist hierbei der verhältnismässig grosse Platzbedarf und der verhältnismässig grosse Aufwand zur Steuerung der Entnahme und Rückgabe der Werkzeuge. Zudem sind sogenannte Flächenspeicher bekannt, bei denen die Werkzeuge auf einer ebenen, meistens senkrechten Fläche angeordnet sind, und von einem Portallader entnommen und zurückgegeben werden. Damit kann eine grosse Werkzeugspeicherkapazität erreicht werden und zudem lässt sich jedes Werkzeug über den Portallader verhältnismässig schnell erreichen, ohne dass die gesamte Werzeugmasse bewegt werden muss, wie dies beispielsweise beim Teller- oder beim Kettenmagazin erforderlich ist. Nachteilig ist jedoch beim Flächenspeicher der sehr grosse Platzbedarf, da jedes Werkzeug ausser seiner eigenen Platzfläche noch zusätzliche, unbenützte zugriffsflächen für den Portallader benötigt, so dass sich für den Portallader grosse Verfahrwege ergeben.

Bei einer weiteren bekannteren Ausführungsform eines Werkzeugspeichers der Anmelderin (CH-Gesuch 4344/86 BE 21 189) wird ein walzenförmiger, drehbar gelagerter Rotor verwendet, welcher an seinen Enden kreisförmige Laufbahnen zur Aufnahme von mit Laufwerken versehenen, relativ zum Rotor in Umfangsrichtung verschiebbaren und an einander anstossenden Werkzeugmagazinen aufweist, die unter Bildung eines magazinfreien Sektors für die Beladung und Entladung des Rotors mit Werkzeugen und für den Zugriff eine Handhabungsgerätes, beispeilsweise eines Werkzeugwechselladers, angeordnet sind. Mit dieser Ausführung wird erreicht, das die Plätze für die einzelnen Werkzeuge sehr dicht an einander angeordnet werden können, wobei allerdings der magazinfreie Sektor für die Belegung mit Werkzeugen entfällt. Dieser Speicher kann zwar sowohl bei Einspindel-, als auch bei Mehrspindel-Werkzeugmaschinen eingesetzt werden, jedoch ist er in seiner Arbeitsweise mehr auf Mehrspindel-Werkzeugmaschinen ausgerichtet.

Die Erfindung betrifft einen Werkzeugspeicher mit einem ebenfalls walzenförmigen, drehbar gelagerten Rotor zur Aufnahme der Werkzeuge, welcher jedoch für die besonderen Anforderungen einer Einspindel-Werkzeugmaschine ausgelegt ist. Dessen Aufgabe ist es, Werkzeuge in grosser Zahl und in genügend kurzer Zeit mit präziser Positionierung bereitzustellen und diese durch eine Wechselvorrichtung in die Spindel bzw. in die Werkzeugaufnahmestelle der Werkzeugmaschine zu wechseln.

Diese Aufgabe wird gemäss der Erfindung dadurch gelöst, dass die Werkzeuge ohne direkte Zugriffsmöglichkeit für die Wechselvorrichtung zur Entnahme und Rückgabe der Werkzeuge mit lükkenloser Dichte am gesamten Umfang der Lagervorrichtung des Rotors gelagert sind, wobei dem Werkzeugspeicher Verschiebemittel zugeordnet sind, mit welchen die Werkzeuge oder einzelne Werkzeuge in radialer Richtung über die Länge der im Rotor gespeicherten Werkzeuge hinaus verschiebbar sind.

Dadurch wird erreicht, dass die Werkzeuge in eine Position gebracht werden können, in welcher sie für die Wechselvorrichtung zum Greifen zugänglich sind.

Ein Ausführungsbeispiel der Erfindung ist in der Zeichnung dargestellt und nachfolgend beschrieben. Es zeigen:

Fig. 1 Einen schematisch dargestellten Vertikalschnitt eines Werkzeugspeichers mit einem Rotor zur Aufnahme von Werkzeugmagazinen,

Fig. 2 einen schematisch dargestellten Horizontalschnitt des Werkzeugspeichers nach Fig. 1,

Fig. 3 eine schematisch dargestellte Seitenansicht des Werkzeugspeichers nach Fig. 1 mit einer aus dem Rotor vorgeschobenen Kassette,

Fig. 4 einen schematisch dargestellten Horizontalschnitt des Werkzeugspeichers nach Fig. 1 mit einem Werkzeugwechsler zum Greifen eines Werkzeuges aus einer hervorgeschobenen Kassette,

Fig. 5 eine Seitenansicht des Werkzeugspeichers wie in Fig. 3 mit einer im Innern des Rotors angeordneten Verschiebeeinheit zum Vorschieben eines Werkzeuges, welches in der vorgeschobenen Position das Greifen mit einem Wechsellader ermöglicht,

Fig. 6 eine Seitenansicht einer Speichereinheit, bei welcher am Rotor ein Mantel befestigt ist, in welchem Halter in magazinfreier Anordnung zur Aufnahme von Werkzeugen in dichtester Verpackung angeordnet sind,

Fig. 7 eine schematische Darstellung des Spannvorganges für ein Werkzeug in der Verschiebeeinheit nach Fig. 5 und

Fig. 8 eine bildliche Darstellung verschiedener Möglichkeiten für das Beladen und Entladen von Einzelwerkzeugen in Verbindung mit dem Werkzeugspeicher.

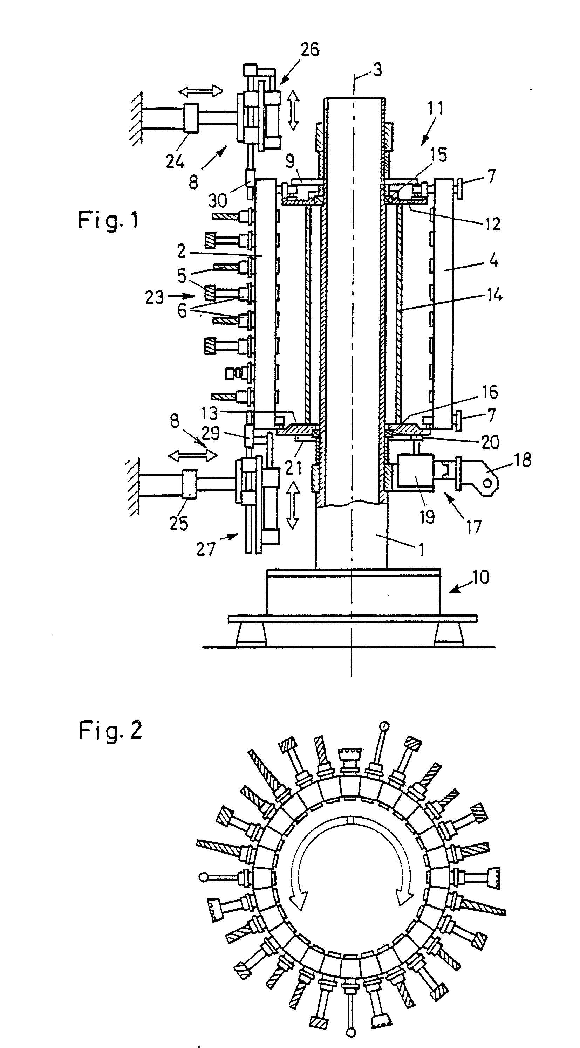

Der Werkzeugspeicher zur Aufnahme von Werkzeugen nach Fig. 1 ist ähnlich aufgebaut wie der Werkzeugspeicher nach dem vorstehend an letzter Stelle beschriebenen Patent der Anmelderin. Dieser Werkzeugspeicher weist eine zentrale zylindrische Säule 1 auf, welche auf einem Fundament 10 aufgestellt ist. Das Fundament 10 kann als Fuss oder als in das Werkzeugmaschinenbett integrierte Konstruktion ausgebildet sein. Die Säule 1 kann mit dem Fundament 10 formschlüssig, z.B. durch Schweissen oder Verstiften oder kraftschlüssig, z.B. durch Klemmen, verbunden sein. Im letztgenannten Fall ergibt sich der Vorteil einer stufenlosen, radialen Einstellung des gesamten Werkzeugspeichers auf die Gegenbenheiten der Maschinenperipherie. Die Säule 1 ist Träger eines walzenförmigen Rotors 11, welches sich aus zwei drehbaren Trägern 12, 13 und einem die Träger 12, 13 verbindenden koaxialen Hülse 14 zusammensetzt und an der Säule 1 mit Lagern 15, 16 drehbar gelagert ist. An der Peripherie der kreisförmigen Träger 12, 13 sind axial und parallel zur Säulenachse 3 sich erstreckende Werkzeugmagazine 2 ringförmig angeordnet. Zur Lagefixierung der Werkzeugmagazine 2 dient eine Spannplatte 9, die auch die Werkzeugmagazine 2 freigibt, wenn sie verschoben werden müssen, wie noch erläutert wird. Die Werkzeugmagazine 2 weisen eine Anzahl nebeneinanderliegender Werkzeugplätze 4 auf, in welchen Werkzeuge 5, welche meistens mit einem Werkzeughalter 6 zusammengebaut sind, in radialer Anordnung gelagert sind. An den Enden der Werkzeugmagazine sind Greiferplatten 7 angordnet, die auch für die Codierung benützt werden können.

Aus Fig. 2 ist erkennbar, dass der gesamte Umfang des Rotors 11 Werkzeugmagazine mit lückenloser Packung aufweist, wobei die packung so dicht ist, dass ein Werkzeugwechsler keine Möglichkeit hat, den Zugriff zu einem Werkzeug zu erreichen. Diese dichte und lückenlose Anordnung der Werkzeuge ergibt eine wesentliche Erhöhung der Speicherkapazität gegenüber dem erwähnten älteren Patent der Anmelderin, bei welchem der Werkzeugspeicher immer eine von Werkzeugen nicht belegt Lücke aufweist. Mit der Auffüllung der Lücke durch weitere Werkzeuge wird eine Erhöhung der Speicherkapazität um 15-25 % erreicht.

Da mit dieser dichten und lückenlosen Anordnung der Werkzeugmagazine 2 und Werkzeuge eine direkte Zugriffsmöglichkeit für den Werkzeugwechsler zur Entnahme der Werkzeuge nicht besteht, ist es zweckmässig, das Werkzeugmagazin mit dem gewünschten Werkzeug linear in radialer Richtung hervorzuschieben. Aus Fig. 1 ist ersichtlich, dass der Rotor 11 durch einen motorischen Antrieb 17, beispielsweise einen Hydromotor 18, über ein Reduktionsgetriebe 19 angetrieben wird, wobei ein Antriebsritzel 20 mit einem koaxial zur Säulenachse 3 angeordneten, an dem unteren Träger 13 befestigten Zahnrad 21 kämmt. Der Antrieb 17 kann im Uhrzeiger- und Gegenuhrzeigersinn, in Stufen oder stufenlos geregelt, gedreht werden. Durch den Antrieb 17 wird das gewünschte Werkzeug mit seinem Magazin 2 in de Bereich eines Magazingreifers 8 geschwenkt, welcher sich aus zwei, in Magazinlängsrichtung angeordneten, gegenüber liegenden Hubeinheiten 26, 27 beispielsweise Pneumatik- oder Hydraulikzylinder besteht, welche an Verschiebearmen 24, 25, beispielsweise Hydraulik- oder Pneumatikzylindern, abgestützt sind. Die Verschiebearme 24, 25 können an geeigneten Stellen des Werkzeugmaschinengestelles (nicht dargestellt) abgestützt sein, ohne dabei den Zugang zu den Werkzeugmagazinen zu behindern.

Die Hubeinheiten 26, 27 weisen am Ende je einen Greifer 29, 30 auf, mit denen das jeweils herangeführte Werkzeugmagazin 2 ergriffen, und, nachdem die Spannplatte 9 gelöst wurde, radial vorgeschoben wird. Gegebenenfalls muss das Werkzeugmagazin 2 etwas angehoben werden, bevor es über die Länge der Werkzeuge der benachbarten Werkzeugmagazine 2 radial vorgeschoben werden kann.

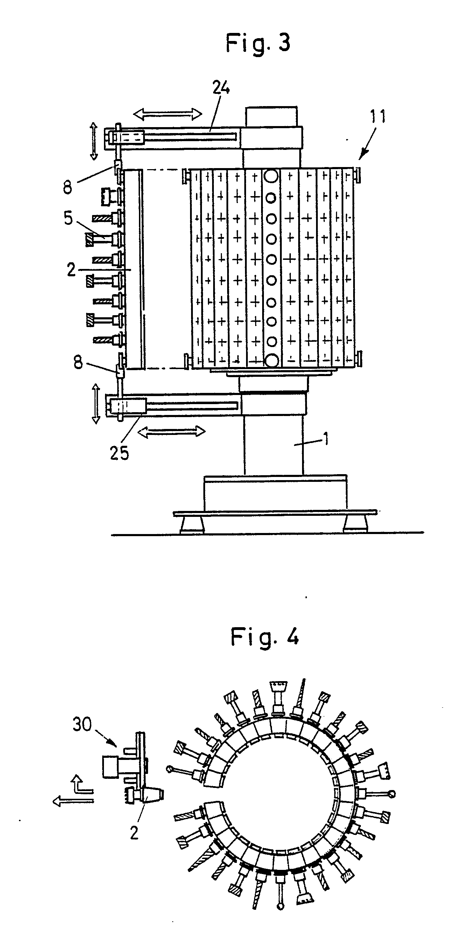

In Fig. 3 sind die Verschiebearme 24, 25 der Verschiebeeinheit 23 an der Säule 1 des Werkzeugspeichers befestigt. Auch in diesem Fall schieben die Vorschubarme 24, 25 das Werkzeugmagazin 2 mit dem gewünschten Werkzeug so weit vor, dass ein Werkzeugwechsler 30, siehe Fig. 4, das Werkzeug ergreifen kann.

Der Zugriff zu einem Werkzeug des Werkzeugspeichers läuft wie folgt ab:

Die Magazinegreifer 8 sind offen. Der Rotor 11 mit den darauf befestigten Werkzeugmagazinen wird rotiert, bis das gewünschte Magazin 2 vor den Greifern 8 positioniert ist. Die Drehbewegung wird je nach der Entfernung zu dem gesuchten Magazin wahlweise im Uhrzeiger- oder im Gegenuhrzeigersinn ausgeführt, wodurch eine schnelle Vorlage des Magazins erreicht wird. Das positionierte Magazin 2 wird gegriffen, gegebenenfalls gehoben und linear hervorgeschoben. An der Uebergabestelle kann der Werkzeugwechselgreifer 30 das gewünschte Werkzeug aus dem Magazin entnehmen. Der Werkzeugwechsler 30 ist hierbei so ausgelegt, dass er den gesamten vertikalen Bereich des Magazins anfahren kann.

Der Werkzeugwechsler 30 transportiert das Werkzeug zu der Arbeitsspindel der Werkzeugmaschine, wo die Werkzeuge ausgetauscht werden. Das benützte Werkzeug wird durch den Werkzeugwechsler 30 zu dem hervorgeschobenen Magazin 2 transportiert. In der Zwischenzeit ist an der Uebergabestelle ein neues Magazin 2 durch den Speicher bereitgestellt worden. Das neue Werkzeug wird durch Abtausch der Plätze: Benütztes Werkzeug / neues Werkzeug aus dem Magazin entnommen. Dieser Zyklus wiederholt sich, wenn ein neues Werkzeug benötigt wird.

Durch die fixierte Anordnung der Magazine 2 am Umfang des Rotors 11 kann die Drehbewegung mit hohen Beschleunigungswerten durchgeführt werden. Die Positionierung des gesuchten Magazins 2 an der Uebergabestelle erfolgt durch einen Positionsgeber, beispielsweise einen Inkrementalgeber. Bei einem Werkzeugspeicher für eine Einspindel-Bearbeitungsmaschine mit sehr kurzen Bearbeitungsoperationen ist es vorteilhaft, mit "fliegender Platzbelegung" zu arbeiten. Dies erhöht zwar den Softwareaufwand für die Steuerung und die Werkzeugverwaltung, begünstigt aber die Zeitoptimierung für die Werkzeugvorlage. Die "feste Platzbelegung" ist natürlich ebenfalls möglich, wenn etwas längere Vorlegezeiten und zusätzliche Bewegungen zulässig sind.

Für die automatische Handhabung der Magazine 2 gelten grundsätzlich dieselben Ueberlegungen wie in dem älteren Patent. Das heisst, das Werkzeugbereitstellungssystem, der Werkzeug-Handwechsel ausserhalb des Arbeitsreiches des Speichers und das Beladen und Entladen der Transporteinheiten sind hier ebenfalls anwendbar.

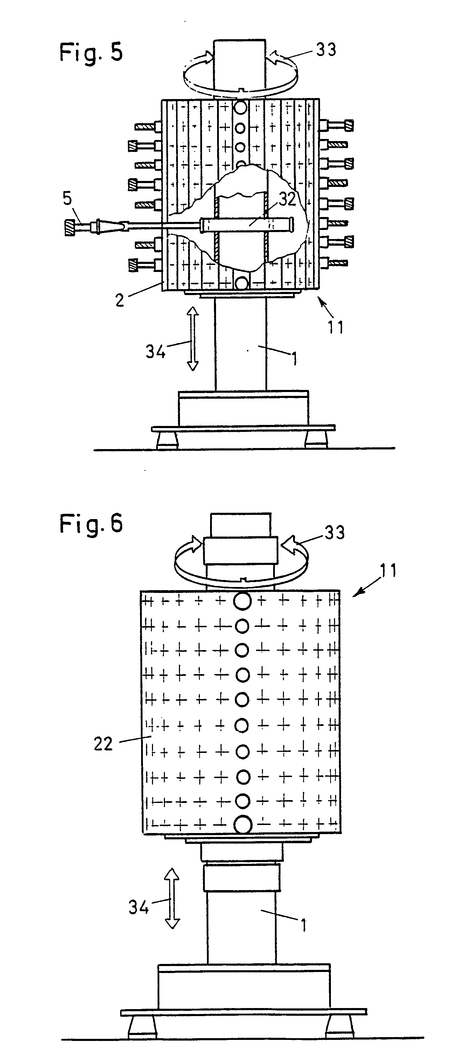

In verschiedenen Anwendungsfällen ist es erwünscht, nicht ein ganzes Magazin 2 bereitzustellen, sondern nur ein Einzelwerkzeug vorzulegen. Hierzu dient die Ausbildung des Speichers gemäss Fig. 5.

In Fig. 5 ist im Innern des Rotors 11 eine Verschiebeeinheit 32 mit einem Greifer angeordnet, welcher an der Säule 1 des Werkzeugspeichers gelagert ist. Mit der Verschiebeeinheit 32 wird ein Werkzeug 5 aus einem Magazin 2 an die Uebergabestelle vorgeschoben. Die Verschiebeeinheit 32 ist zweckmässig ein Pneumatik- oder Hydraulikzylinder mit einer entsprechenden Steuerung.

Die Verschiebeeinheit 32 kann auf der Säule 1 verschiebbar ausgebildet sein, damit sie jedes Werkzeug eines Magazins in die Uebergabestelle verschieben kann. In Fig. 5 ist die Verschiebeeinheit 32 auf der Säule 1 ortsfest angeordnet, während der Rotor 11 in beiden Richtungen drehbar und zudem auf der Säule verschiebbar ist, siehe die Doppelpfeile 33, 34 für die Drehbewegung in beiden Richtungen und für die Hubbewegung zur Einstellung der Höhenlage des Rotors 11. Damit ist es möglich, dass der Werkzeugwechselgreifer ein einzelnes Werkzeug aus der gesamten Werkzeugmenge an einer einzigen definierten Position übernehmen kann. Der Werkzeugwechsel erfolgt nach der Bereitstellung eines einzelnen Werkzeuges an der Uebergabestelle in gleicher Weise, wie dies bereits beschrieben wurde. An Stelle des Vorschiebens eines Werkzeugmagazins 2 wird in diesem Fall ein einzelnes Werkzeug durch die Verschiebeeinheit 32 von hinten ergriffen und an die Uebergabestelle vorgeschoben.

Die Werkzeugmagazine 2, welche in dichter und lückenloser Anordnung am Umfang des Drehtellers sitzen, können durch einen geschlossenen Mantel 22 am Rotor 11 ersetzt werden, welcher Lagerungen zur Aufnahme der Werkzeuge 5 aufweist. Damit bleiben sämtliche genannten Vorteile des Werkzeugspeichers wie ein hohe Speichermenge, schneller Werkzeug-Zugriff usw. bestehen und es entfällt lediglich der Vorteil des Beladens und Entladens der ganzen Werkzeugmagazine. Die Anwendung des geschlossenen Mantels kann deshalb dort zweckmässig eingesetzt werden, wo das Beladen und Entladen der Magazine nicht erforderlich ist. Solche Anwendungen sind beispielsweise Werkzeuge mit langer Standzeit, Werkzeuge für die Aluminiumbearbeitung und für Werkzeugspeicher, bei denen nur Einzelwerkzeuge ausgetauscht werden müssen. Das Vorschieben der einzelnen Werkzeuge an die Uebergabestelle erfolgt durch die innenliegende Verschiebeeinheit 32, wobei zweckmässig der Rotor 11 entsprechend der Doppelpfeile 33, 34 bewegt werden kann.

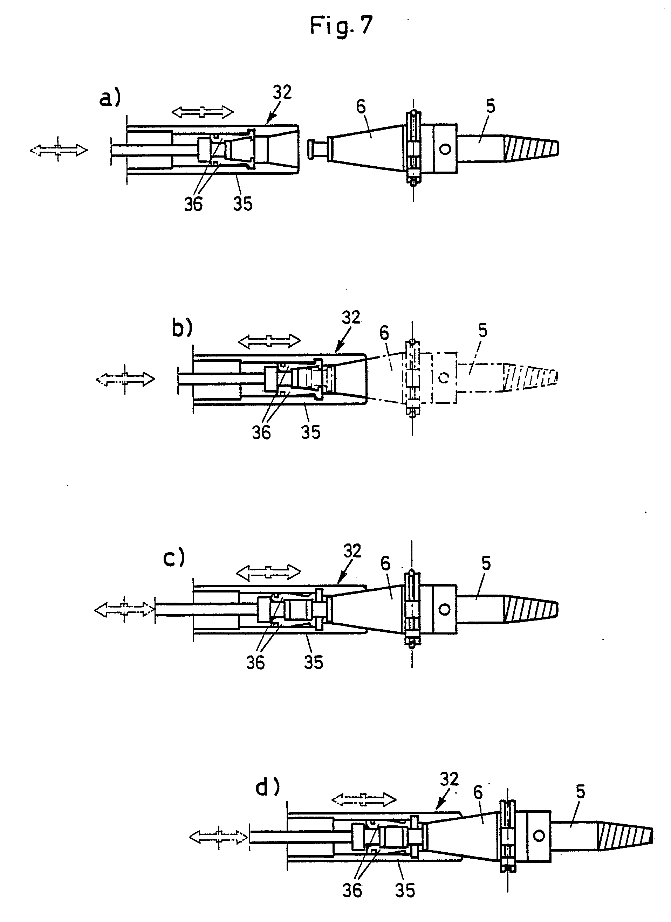

In Fig. 7 ist die Ausbildung des Greifers der innenliegenden Verschiebeeinheit 32 in vier Phasen a)-d) dargestellt. Die Verschiebeeinheit weist an ihrem freien Ende einen Spannkopf mit Spannbakken 36 auf, der zur Uebernahme eines Werkzeuges 5 mit einem Werkzeughalter 6 nach vorne geschoben wird. In der Phase b) ist das Werkzeug 5 im Spannkopf 35 eingeführt und in der Phase c) ist das Werkzeug auch durch die Spannbacken 36 gespant. Nun kann, siehe Phase d) das gespannte Werkzeug durch die Verschiebeeinheit vorgeschoben werden. An der Uebergabestelle erfolgt die Uebernahme des Werkzeuges durch den Werkzeugwechsler 30.

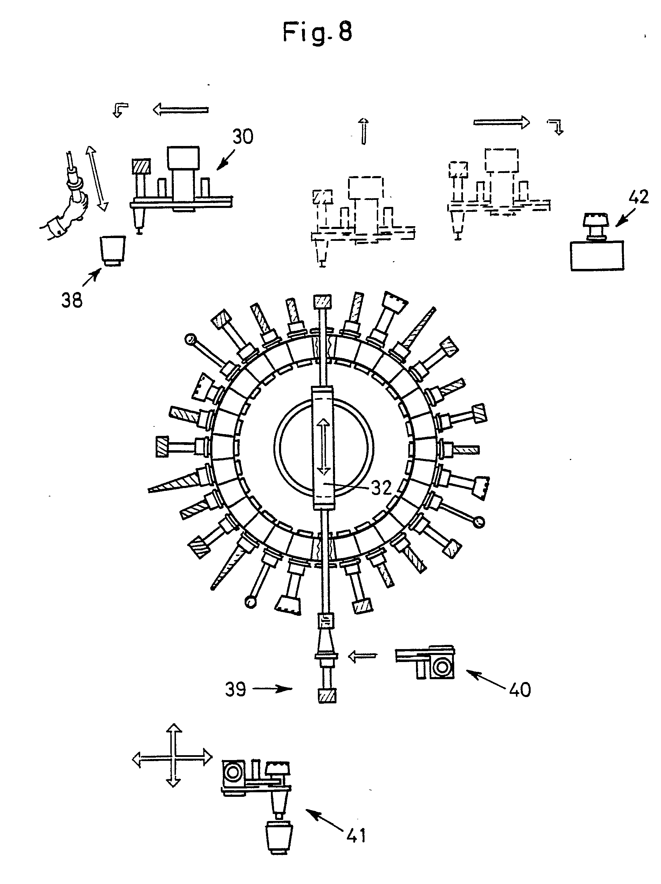

In Fig. 8 sind die Möglichkeiten für das Beladen und Entladen von Einzelwerkzeugen dargestellt. Die einzelnen Werkzeuge können mit dem gleichen Werkzeugwechsler 30, der auch die maschinenspindel bedient, beladen und entladen werden, siehe die Anordnung im oberen Teil der Fig. 8. Die Werkzeuge werden an einer Uebergabestation 38 einzeln oder auch mehrfach, z.B. in einem Magazin gesammelt. Diese Uebergabestation ist auch für das Bedienungspersonal zugänglich, was auch die Handbedienung des Werkzeugmagazins ermöglicht.

In einer weiteren Anordnung können die Einzelwerkzeuge durch eine zweite Verschiebeeinheit 32 an einer bestimmten Stelle hervorgeschoben werden, wobei der Zuordnungswinkel - in Fig. 8 180° - verschieden gewählt werden kann. An dieser Uebergabestelle 38 können die Einzelwerkzeuge durch einen Portallader-Wechsler 40 übernommen und von dort zu einer zentralen Werkzeugausgabestelle (nicht dargestellt) transportiert werden. Durch diese Anordnung lässt sich auch ein verketteter Werkzeugaustausch zwischen zwei oder mehreren Einzelmaschinen verwirklichen. Der manuelle Werkzeugaustausch ist an dieser Stelle ebenfalls möglich.

Die Einzelwerkzeuge können ebenfalls durch die zweite Verschiebeeinheit 32 an der Uebergabestation 39 vorgelegt werden. Hier übernimmt ein stationärer Werkzeugwechsler 41 die Werkzeuge und legt diese in ein Transportmittel, z.B. in die erwähnte Transporteinheit. Mit 42 ist die Uebergabestation der Bearbeitungseinheit oder die Spindel bezeichnet.

## Ansprüche

1. Werkzeugspeicher für Werkzeugmaschinen mit numerischer Steuerung zur spanenden Bearbeitung von Werkstücken, insbesondere für Einspindel-Werkzeugmaschine, zum Speichern von Werkzeugen und zur Entnahme und Rückgabe der Werkzeuge mittels einer Wechselvorrichtung, welcher Speicher eine ortsfeste, bodenseitig befestigte, senkrechte Säule (1) aufweist, die einen walzenförmigen, drehbar gelagerten Rotor (11) trägt, welcher mit einer zur Aufnahme der Werkzeuge dienenden Lagervorrichtung zur formschlüssigen Lagerung der Werkzeuge ausgerüstet ist, dadurch gekennzeichnet, dass die Werkzeuge (5) ohne direkte Zugriffsmöglichkeit für die Wechselvorrichtung zur Entnahme und Rückgabe der Werkzeuge mit lückenloser Dichte am gesamten Umfang der Lagervorrichtung des Rotors (11) gelagert sind, wobei dem Werkzeugspeicher Verschiebemittel (24, 25; 32) zugeordnet sind, mit welchen die Werkzeuge oder einzelne Werkzeuge in radialer Richtung über die Länge der im Rotor gespeicherten Werkzeuge (5) hinaus verschiebbar sind.

2. Werkzeugspeicher nach Anspruch 1, dadurch gekennzeichnet, dass die Lagervorrichtungen als ein am Rotor (11) befestigter Mantel (22) ausgebildet sind, in welchem die Werkzeuge in Werkzeugaufnahmen (4) in dichter und lückenloser Anordnung verteilt sind.

3. Werkzeugspeicher nach Anspruch 2, dadurch gekennzeichnet, dass der Mantel sich aus einzelnen, am Rotor (11) befestigten Magazinen (2) zusammensetzt, in denen die Werkzeuge (5) in einer Reihe angeordnet sind, wobei die Magazine dicht aneinander liegen.

4. Werkzeugspeicher nach Anspruch 3, dadurch gekennzeichnet, dass die Verschiebemittel als eine dem Werkzeugspeicher zugeordnete Magazin-Verschiebeeinheit (23) ausgebildet ist, bei welcher oberhalb und unterhalb des Rotors (11) je ein Verschiebearm (24, 25) angebracht ist, die mit Magazingreifern (8) zum Greifen eines Magazin (2) ausgerüstet sind.

5. Werkzeugspeicher nach Anspruch 4, dadurch gekennzeichnet, dass die Verschiebearme (24, 25) mit ihren Greifmitteln (8) an der Säule (1) oberhalb und unterhalb des Rotors (11) befestigt sind.

6. Werkzeugspeicher nach Anspruch 1 oder 2, dadurch gekennzeichnet, dass die Verschiebemittel eine im Innern des Rotors (11) gelagerte Werkzeugverschiebeeinheit (32) ist, bei welcher mindestens ein Verschiebearm vorgesehen ist, der mit radial verschiebbaren Greifmitteln (35, 36) zum Greifen und zum Verschieben eines einzelnen Werkzeuges (5) in radialer Richtung über die Länge der im Rotor gespeicherten Werkzeuge hinaus in eine für den Zugriff durch eine Wechselvorrichtung (30) geeignete Position ausgerüstet sind.

7. Werkzeugspeicher nach Anspruch 6, dadurch gekennzeichnet, dass die an der Säule (1) angeordnete Verschiebeeinheit (32) als eine in der Höhe längs der Säule verschiebbare Einheit ausgebildet ist.

8. Werkzeugspeicher nach Anspruch 1 oder 2, dadurch gekennzeichnet, dass der Rotor (11) mit einer Hubeinrichtung versehen ist, mit welcher er an der Säule (1) verstellbar ist und mit welcher ein einzelnes Werkzeug (5) in eine ortsfeste Zugriffsposition verschiebbar ist.

Fig. 1

Fig. 2

## Fig. 3

## Fig. 4

Fig. 5

Fig. 6

# Fig. 7

a)

32
6
5
36    35

b)

32
6
5
36    35

c)

32
6
5
36    35

d)

32
6
5
36    35

# Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 144 912 (MAHO) * Seiten 4-6; Figuren 1,2 * | 1,2,6 | B 23 Q 3/155 |
| A | | 8 | |
| | --- | | |
| D,P | EP-A-0 266 646 (STARRFRÄSMASCHINEN AG) | 1-4 | |
| A | * Insgesamt * | | |
| | --- | | |
| A | GB-A-2 157 996 (WARNER & SWASEY) * Seite 2; Figuren 6-10 * | 1-3,6,7 | |
| | --- | | |
| A | FR-A-2 105 259 (LORENZ) * Seiten 3-7; Figuren * | 1-3,6,8 | |
| | --- | | |
| A | PATENT ABSTRACTS OF JAPAN, Band 11, Nr. 318 (M-632)[2765], 16. Oktober 1987; & JP-A-62 102 938 (MITSUBISHI HEAVY IND. LTD) 13-05-1987 * Figuren * | 1-3 | |
| | --- | | |
| D,A | DE-A-1 912 369 (MAKINO) * Seiten 3-7; Figuren * | 1-3 | RECHERCHIERTE SACHGEBIETE (Int. Cl.4) |
| | --- | | |
| A | DE-A-1 556 626 (LORENZ) * Seiten 4-7; Figuren * | 1,2,6,8 | B 23 Q B 65 Q |
| | --- | | |
| A | DD-A- 236 041 (SMAB) * Seiten 5,6; Figuren * | 1,2 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 18-01-1989 | ROSENBAUM H.F.J. |

EPO FORM 1503 03.82 (P0403)